(19) **Europäisches Patentamt / European Patent Office / Office européen des brevets**

(11) **EP 2 939 738 B1**

(12) **EUROPEAN PATENT SPECIFICATION**

(45) Date of publication and mention
of the grant of the patent:
**20.12.2023 Bulletin 2023/51**

(21) Application number: **12890735.9**

(22) Date of filing: **28.12.2012**

(51) International Patent Classification (IPC):
**B01J 23/88** [(2006.01)]    **C10K 1/08** [(2006.01)]
**C10K 3/04** [(2006.01)]

(52) Cooperative Patent Classification (CPC):
**C10K 3/04; B01J 23/6525; B01J 23/8872;**
**B01J 23/8906; B01J 23/894; B01J 23/8946;**
**B01J 27/1856; B01J 27/19; B01J 35/023;**
**B01J 37/0063; B01J 37/0242; B01J 37/0244;**
**C10K 1/004; C10K 1/005; C10K 1/024;**     (Cont.)

(86) International application number:
**PCT/JP2012/084231**

(87) International publication number:
**WO 2014/103075 (03.07.2014 Gazette 2014/27)**

(54) **CO SHIFT CATALYST**

CO-SHIFTKATALYSATOR

CATALYSEUR DE CONVERSION DE CO

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**04.11.2015 Bulletin 2015/45**

(73) Proprietor: **Mitsubishi Heavy Industries, Ltd.**
**Chiyoda-ku**
**Tokyo 100-8332 (JP)**

(72) Inventors:
• **YONEMURA, Masanao**
**Tokyo 108-8215 (JP)**
• **YASUTAKE, Toshinobu**
**Tokyo 108-8215 (JP)**
• **SAWATA, Akihiro**
**Tokyo 108-8215 (JP)**
• **SEIKI, Yoshio**
**Tokyo 108-8215 (JP)**
• **TANAKA, Yukio**
**Tokyo 108-8215 (JP)**
• **HIGASHINO, Koji**
**Tokyo 108-8215 (JP)**

• **ABE, Hyota**
**Tokyo 108-8215 (JP)**
• **YOSHIDA, Kaori**
**Tokyo 108-8215 (JP)**

(74) Representative: **Henkel & Partner mbB**
**Patentanwaltskanzlei, Rechtsanwaltskanzlei**
**Maximiliansplatz 21**
**80333 München (DE)**

(56) References cited:
**WO-A1-2011/105501     JP-A- 2005 521 617**
**JP-A- 2007 520 333     JP-A- 2011 157 486**
**JP-A- 2012 066 237     US-A- 4 906 448**
**US-A1- 2012 027 659     US-A1- 2012 294 789**

• **HULTEBERG, C.: 'Sulphur-tolerant catalysts in**
**small-scale hydrogen production, a review'**
**INTERNATIONAL JOURNAL OF HYDROGEN**
**ENERGY vol. 37, no. 5, 24 December 2011, pages**
**3978 - 3992, XP055184390**

**(Cont. next page)**

(52) Cooperative Patent Classification (CPC): (Cont.)
     **C10K 1/08;** B01D 53/1462; Y02P 20/151

## Description

Field

The present invention relates to a CO shift catalyst that converts CO in a gasification gas into COz. Background

Effective use of coal has been attracted as one of important countermeasures for recent energy problems.

On the other hand, to convert coal into an energy medium with a high value-added, an advanced technology such as a coal gasification technology and a gas purifying technology is necessary.

An integrated coal gasification combined cycle (IGCC) system, which generates power using the gasification gas, is suggested (Patent Literature 1).

The integrated coal gasification combined cycle (IGCC) represents a system in which coal is converted into a combustible gas in a high-temperature and high-pressure gasification furnace, and combined cycle power generation is performed by a gas turbine and a steam turbine by using the gasification gas as a fuel.

For example, the majority of hydrocarbon compounds that exist in the coal gasification gas (generated gas) is carbon monoxide (CO), and carbon dioxide ($CO_2$) and hydrocarbon ($CH_4$, CnHm) occupy only several percentage of the hydrocarbon compound. As a result, it is necessary to convert CO that exists in the generated gas into COz so as to recover $CO_2$, and conversion into $CO_2$ through the following reaction by using a shift catalyst while adding water vapor ($H_2O$) is suggested (Patent Literature 2).

$$CO + H_2O \Leftrightarrow CO_2 + H_2 + 40.9 \text{ kJ/mol (exothermic reaction)} \qquad (1)$$

From a finding about a shift reaction in a chemical industry field until now, when an water vapor addition ratio ($H_2O$/CO) at an inlet of a CO shift reactor is sufficiently increased to allow the reaction of (1) to progress, a desired conversion ratio of CO → $CO_2$ is obtained.

Patent Literature 3 discloses a CO shift catalyst having high sulfur resistance and exerting stable performance even when the concentration of hydrogen sulfide is low. The CO shift catalyst comprises (a) an active component including either molybdenum or iron as a main ingredient, and either nickel or ruthenium as an accessory component, and (b) a carrier which carries the active compound and is made of one or more oxides of titanium, zirconium and cerium.

Citation List

Patent Literature

Patent Literature 1: Japanese Patent Application Laid-open No. 2004-331701
Patent Literature 2: Japanese Patent Application Laid-open No. 2011-157486
Patent Literature 3: United States Patent Application Publication No. 2012/294789 A1

Summary

Technical Problem

For example, a Co-Mo/$Al_2O_3$-based catalyst has been typically used as a CO shift catalyst. However, this catalyst exhibits activity at a high-temperature region (for example, 350°C or higher), and thus there is a concern of precipitation of C.

Therefore, it is necessary to add an excessive amount of water vapor (water vapor ($H_2O$)/CO $\geq$ 3) as a countermeasure against the precipitation of C.

On the other hand, an IGCC plant provided with a $CO_2$ recovering facility is a power generation plant, and it is necessary to consider an environment (reduction in $CO_2$ emission), and it is also necessary to put emphasis on power generation efficiency of the plant.

That is, as a water vapor addition source for realizing water vapor addition ratio ($H_2O$/CO) while being supplied to the shift reactor, for example, pressurized steam in extracted air from a heat recovery steam generator (HRSG) is used. However, reduction in an amount of water vapor that is extracted is an important factor for an improvement in plant efficiency, and thus it is demanded to reduce the amount of water vapor that is extracted from the heat recovery steam generator (HRSG) as can as possible from the viewpoint of an increase in power generation efficiency.

Therefore, it is desired earnestly to provide a CO shift catalyst in which an improvement in durability against the precipitation of C is realized, and CO shift conversion is stably possible for a long period of time even in a case where a supply amount of water vapor greatly decreases approximately from water vapor $(H_2O)/CO = 3$ to water vapor $(H_2O)/CO = 1$.

The invention has been made in consideration of the above-described problem, and an object thereof is to provide a CO shift catalyst in which catalyst deterioration is not great even when an amount of water vapor is small and CO shift reaction can be carried in a stable and efficient manner, a CO shift reactor, and a method for purifying a gasification gas. The invention is defined by the claims.

Solution to Problem

In order to solve the above mentioned problems, there is provided a CO shift catalyst that reforms carbon monoxide (CO) in a gasification gas, and which is defined in appended claim 1.

Advantageous Effects of Invention

In the CO shift catalyst according to the invention, a carrier is composed of a composite oxide, and thus an initial specific surface area is increased, and thus even when precipitation of carbon (C) occurs with a small amount of water vapor, it is possible to attain an effect in which durability is excellent and a CO shift reaction can be stably maintained for a long period of time. Brief Description of Drawings

FIG. 1 is a schematic diagram of a gasification gas purifying system provided with a CO shift reactor filled with a CO shift catalyst according to this example.
FIG. 2 is a diagram illustrating an example of a coal gasification power generation plant.

Description of Embodiments

Hereinafter, the invention will be described in detail with reference to the attached drawings. In addition, the invention is not limited to the following example. In addition, constituent elements in the following example include constituent elements which can be easily assumed by a person having ordinary skill in the art, and substantially the same constituent elements which are in a so-called equivalent range. Furthermore, constituent elements disclosed in the following example may be appropriately combined.

Example

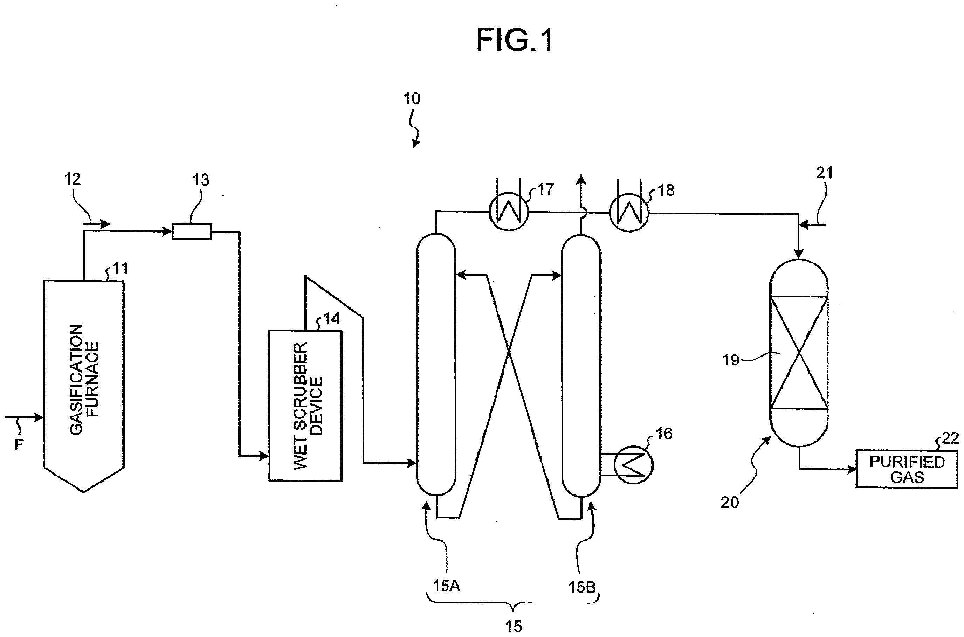

A CO shift catalyst according to an example of the invention, and a CO shift reactor using the CO shift catalyst will be described with reference to the attached drawings. FIG. 1 is a schematic diagram of a gasification gas purifying system provided with the CO shift reactor filled with the CO shift catalyst.

As illustrated in FIG. 1, a gasification gas purifying system 10 includes a gasification furnace 11 that gasifies coal that is a fuel F, a filter 13 that removes dust in a gasification gas 12 that is a generated gas, a wet scrubber device 14 that removes halogen in the gasification gas 12 after passing through the filter 13, a gas purifying device 15 which includes an absorber 15A that absorbs and removes $CO_2$ and $H_2S$ in the gasification gas 12 after heat exchange and a regenerator 15B that regenerates $CO_2$ and $H_2S$, and which is provided with a regeneration superheater 16 on the regenerator 15B side, first and second heat exchangers 17 and 18 which raise a temperature of the gasification gas 12, and a CO shift reactor 20 provided with a CO shift catalyst 19 which converts CO in the gasification gas 12 heated to a temperature, for example, of 300°C into $CO_2$ to obtain a purified gas 22. In addition, a reference numeral 21 in FIG. 1 represents water vapor.

In the gasification furnace 11, coal that is the fuel F is brought into contact with a gasification agent such as air and oxygen, and is combusted and gasified, whereby a gasification gas 12 is generated. The gasification gas 12 that is generated in the gasification furnace 11 contains carbon monoxide (CO), hydrogen ($H_2$), and carbon dioxide ($CO_2$) as a main component. However, the gasification gas 12 also contains elements (for example, a halogen component and a heavy metal such as mercury (Hg)) contained in coal in a slight amount, non-combusted compounds (for example, polycyclic aromatic compounds such as phenol and anthracene, cyan, ammonia, and the like) during coal gasification, and the like in a slight amount.

The gasification gas 12 generated in the gasification furnace 11 is introduced into the filter 13 from the gasification furnace 11. Dust in the gasification gas 12 that is introduced into the filter 13 is removed from the gasification gas 12. In addition, in addition to the filter, a cyclone, an electrostatic precipitator (EP), and the like may be used.

After removal of dust with the filter 13, the gasification gas 12 is subjected to gas purification with the gas purifying device 15, and then a temperature of the gasification gas 12 is risen with the first and second heat exchangers 17 and 18.

Subsequently, the water vapor 21 is supplied by a water vapor supply device (water vapor supply means), and then the gasification gas 12 is introduced to the CO shift reactor 20 provided with the CO shift catalyst 19. Carbon monoxide (CO) in the gasification gas 12 is reformed with the CO shift reactor 20 to convert CO into carbon dioxide ($CO_2$) under presence of the CO shift catalyst 19.

The CO shift catalyst 19 according to the invention is a CO shift catalyst that reforms carbon monoxide (CO) in a gas. The CO shift catalyst contains an active component including either molybdenum (Mo) or iron (Fe) as a main component, and either nickel (Ni) or ruthenium (Ru) as an accessory component, and a carrier which carries the active component and includes a composite oxide.

According to the invention, the composite oxide that is used is selected from the group consisting of $TiOz$-$SiO_2$ $TiO_2$-$La_2O_3$. The composite oxide increases a specific surface area of a carrier, thereby improving initial performance (initial CO conversion ratio).

According to this, even in a small amount of water vapor, a decrease in activity due to precipitation of carbon is reduced.

As a result, in the case of using the CO shift catalyst of the invention, even when an amount of water vapor is reduced (for example, a great decrease approximately from water vapor ($H_2O$)/CO = 3 to water vapor ($H_2O$)/CO = 1), the initial CO conversion ratio is high. Accordingly, even when precipitation of carbon (C) occurs, it is possible to maintain activity performance for a long period of time. As a result, even when a CO shift reaction is allowed to progress with a small amount of water vapor for a long period of time, durability against the precipitation of carbon becomes excellent, and thus CO shift reaction efficiency does not greatly decrease, and it is possible to allow satisfactory CO shift reaction to progress.

According to the invention, the carried amount of molybdenum (Mo) or iron (Fe), which is a main component (first component), is set to 0.1 wt% to 25 wt%, and preferably 7 wt% to 20 wt%, and the er- carried amount of nickel (Ni) or ruthenium (Ru), which is an accessory component (second component), is set to 0.01 wt% to 10 wt%, and preferably 2 wt% to 10 wt%.

In addition, examples of a promoter (third component) include any one kind of an alkali metal or an alkali-earth metal such as calcium (Ca), potassium (K), and sodium (Na), phosphorus (P), and magnesium (Mg). In addition, barium (Ba), strontium (Sr), and the like may be used.

In addition, phosphorous (P) does not belong to the alkali metal or the alkali-earth metal, but has an operation of suppressing the acid site, and thus may be used as the promoter.

In the invention, for example, when any one kind of calcium (Ca), potassium (K), sodium (Na), phosphorus (P), and magnesium (Mg) is added, an initial acid site is reduced.

As a result, for example, a CO conversion ratio after a durability test for 100 hours becomes higher than that of the catalyst in the related art.

The reason is assumed to be because an initial amount of acid in a catalyst decreases due to addition of the promoter (third component), and thus a precipitated amount of carbon (C) can be reduced.

As described above, according to the CO shift catalyst according to the invention, when converting CO in the gasification gas 12 gasified in the gasification furnace 11 into $CO_2$, even in a case where a great decrease occurs approximately from water vapor ($H_2O$)/CO = 3 to water vapor ($H_2O$)/CO = 1, precipitation of carbon is suppressed, and thus CO shift conversion is stably possible for a long period of time. In addition, an amount of water vapor that is supplied is reduced, and thus it is possible to provide a gas purifying process with high efficiency.

[Test Examples]

Hereinafter, test examples illustrating the effect of the invention will be described. Test examples 1, 6, 7 and 8 are in accordance with invention.

1) Manufacturing Method of Test Catalyst 1

320.2 g of $TiOSO_4$ that is a Ti source, and 1441.8 g of water were mixed at room temperature. Then, the resultant mixed solution was mixed with 200 g of "SnowTex O (trade name)" manufactured by NISSAN CHEMICAL INDUSTRIES, LTD. (silica sol, $SiO_2$ = 20 wt%). Subsequently, 9 vol% $NH_4OH$ was gradually added dropwise to the resultant mixed solution to adjust pH in the mixed solution to 7 so as to generate a precipitate. Then, stirring was performed for two hours for aging. The precipitate obtained after the aging was filtered and was sufficiently cleaned. Then, the precipitate was subjected to drying and firing (five hours at 500°C), thereby obtaining a carrier.

NiO and $MoO_3$ were added to the carrier in such a manner that 4 wt% of NiO was carried and 14 wt% of $MoO_3$ was carried on the basis of the total amount of powders which were finally obtained, and then the resultant mixture was subjected to evaporation to dryness and impregnation on the porcelain dish. In addition, powders that were obtained were completely dried with a dryer, and were fired at 500°C for three hours (a temperature rising rate of 100°C/h), thereby obtaining a powder catalyst.

The powder catalyst that was obtained was fixed with a compression molding machine set to 30 tons, and was pulverized to have a particle size in a predetermined particle size range (for example, 2 mm to 4 mm). Then, the pulverized powder was sieved to obtain Test Catalyst 1.

2) Manufacturing Method of Test Catalyst 2 (not according to the invention)

Test Catalyst 2 was obtained in the same operation as in the manufacturing of Test Catalyst 1 except that $ZrOCl_2$ was used instead of the SiOz source as a carrier in an amount corresponding to 40 g in terms of $ZrO_2$ in the manufacturing of Test Catalyst 1.

3) Manufacturing Method of Test Catalyst 3

Test Catalyst 3 was obtained in the same operation as in the manufacturing of Test Catalyst 1 except that $Al(NO_3)_3 \cdot 9H_2O$ was used instead of the SiOz source as a carrier in an amount corresponding to 40 g in terms of $Al_2O_3$ in the manufacturing of Test Catalyst 1.

4) Manufacturing Method of Test Catalyst 4

Test Catalyst 4 was obtained in the same operation as in the manufacturing of Test Catalyst 1 except that $ZrOCl_2$ was used instead of $TiOSO_4$ as a carrier in an amount corresponding to 160 g in terms of ZrOz, and $ZrO_2/Al_2O_3$ (weight ratio) was set to 80 : 20 in the manufacturing of Test Catalyst 3.

5) Manufacturing Method of Test Catalyst 5 (not according to the invention)

Test Catalyst 5 was obtained in the same operation as in the manufacturing of Test Catalyst 1 except that $Ce(NO_3)_3 \cdot 6H_2O$ was used instead of the SiOz source as a carrier in an amount corresponding to 40 g in terms of $CeO_2$, and TiOz/CeOz (weight ratio) was set to 80 : 20 in the manufacturing of Test Catalyst 1.

6) Manufacturing Method of Test Catalyst 6

Test Catalyst 6 was obtained in the same operation as in the manufacturing of Test Catalyst 1 except that $La(NO_3)_3 \cdot 9H_2O$ was used instead of the SiOz source as a carrier in an amount corresponding to 40 g in terms of $La_2O_3$, and $TiO_2/La_2O_3$ (weight ratio) was set to 80 : 20 in the manufacturing of Test Catalyst 1.

7) Manufacturing Method of Test Catalyst 7

Test Catalyst 7 was obtained in the same operation as in the manufacturing of Test Catalyst 1 except that amounts of $TiOSO_4$ and silica sol which were added as a carrier were changed, and a weight ratio of $TiO_2/SiO_2$ was changed to 50 : 50 in the manufacturing of Test Catalyst 1.

8) Manufacturing Method of Test Catalyst 8

Test Catalyst 8 was obtained in the same operation as in the manufacturing of Test Catalyst 1 except that amounts of $TiOSO_4$ and silica sol which were added as a carrier were changed, and a weight ratio of TiOz/SiOz was changed to 95 : 5 in the manufacturing of Test Catalyst 4.

9) Manufacturing Method of Test Catalyst 9 (not according to the invention)

Test Catalyst 9 was obtained in the same operation as in the manufacturing of Test Catalyst 1 except that amounts of $TiOSO_4$ and $ZrOCl_2$ which were added as a carrier were changed, and a weight ratio of $TiO_2/ZrO_2$ was changed to 50 : 50 in the manufacturing of Test Catalyst 2.

10) Manufacturing Method of Test Catalyst 10 (not according to the invention)

Test Catalyst 10 was obtained in the same operation as in the manufacturing of Test Catalyst 1 except that amounts of $TiOSO_4$ and which were added as a carrier were changed, and a weight ratio of $TiO_2/ZrO_2$ was changed to 95 : 5 in the manufacturing of Test Catalyst 2.

11) Manufacturing Method of Comparative Catalyst

Comparative Catalyst was obtained in the same operation as in the manufacturing of Test Catalyst 1 except that titanium oxide ($TiO_2$ (trade name: MC-90), manufactured by ISHIHARA SANGYO KAISHA, LTD.) was used as a carrier.

Evaluation of the catalysts was performed as described below.

An evaluation test was performed as follows. 3.3 cc of catalyst was filled in a reaction tube with a tubular shape having an inner diameter of 14 mm, and then catalytic activity was evaluated with a flow type microreactor device.

In comparison of initial catalytic activity, a CO conversion ratio, which is a variation between gas flow rates on an inlet side and an outlet side of a catalyst layer, was obtained.

Evaluation conditions about initial activity and activity after endurance were set as follows.

A gas composition was set to $H_2/CO/CO_2$ = 30/50/20 in terms of mol%, $H_2S$ was set to 700 ppm, S/CO was set to 1.0, and a test was performed under conditions of 0.9 MPa, a temperature of 250°C, and SV = 6,000 $h^{-1}$.

A CO conversion ratio was obtained by the following Expression (I).

$$CO \text{ conversion ratio } (\%) = (1-(\text{flow velocity (mol/hour) of a CO gas on an outlet side of a catalyst layer})/(\text{flow velocity (mol/hour) of the CO gas on an inlet side of the catalyst layer})) \times 100 \qquad (I)$$

In addition, a durability (acceleration) test was performed under the following conditions:

A gas composition was set to $H_2/CO/CO_2$ = 30/50/20 in terms of mol%, $H_2S$ was set to 700 ppm, S/CO was set to 0.1, and a test was performed under conditions of 0.9 MPa, a temperature of 450°C, and SV = 2,000 $h^{-1}$.

Composition lists of the catalyst and test results are shown in Table 1.

Table 1 Table 1

| | Active components | | | | Carrier | Weight ratio | Initial CO conversion (%) ratio | CO conversion (%) after endurance | Initial specific surface area (m$^2$/g) | Specif surfac area after 100 h (m$^2$/g) |
| | Metal | Carried amount (wt%) | Metal | Carried amount (wt%) | | | | | | |
|---|---|---|---|---|---|---|---|---|---|---|
| Test Catalyst 1 | Mo | 14 | Ni | 4 | TiO$_2$-SiO$_2$ | 80:20 | 83.8 | 62.9 | 121 | 58.4 |
| Test Catalyst 2* | ↑ | ↑ | ↑ | ↑ | TiO$_2$-ZrO$_2$ | 80:20 | 82.9 | 64.8 | 118 | 59.7 |
| Test Catalyst 3* | ↑ | ↑ | ↑ | ↑ | TiO$_2$-Al$_2$O$_3$ | 80:20 | 81.7 | 63.2 | 112 | 56.7 |
| Test Catalyst 4* | ↑ | ↑ | ↑ | ↑ | ZrO$_2$-Al$_2$O$_3$ | 80:20 | 82.5 | 64.0 | 112 | 57.2 |
| Test Catalyst 5* | ↑ | ↑ | ↑ | ↑ | TiO$_2$-CeO$_2$ | 80:20 | 81.3 | 63.2 | 103 | 49.4 |
| Test Catalyst 6 | ↑ | ↑ | ↑ | ↑ | TiO$_2$-La$_2$O$_3$ | 80:20 | 85.9 | 67.8 | 102 | 48.9 |
| Test Catalyst 7 | ↑ | ↑ | ↑ | ↑ | TiO$_2$-SiO$_2$ | 50:50 | 84.4 | 66.2 | 128 | 60.3 |
| Test Catalyst 8 | ↑ | ↑ | ↑ | ↑ | TiO$_2$-SiO$_2$ | 95:5 | 83.8 | 65.3 | 118 | 53.2 |
| Test Catalyst 9* | ↑ | ↑ | ↑ | ↑ | TiO$_2$-ZrO$_2$ | 50:50 | 82.5 | 63.8 | 130 | 60.8 |
| Test Catalyst 10* | ↑ | ↑ | ↑ | ↑ | TiO$_2$-ZrO$_2$ | 95:5 | 81.0 | 63.2 | 113 | 51.0 |
| Comparative Catalyst | ↑ | ↑ | ↑ | ↑ | TiO$_2$ | 100 | 73.2 | 54.9 | 69.5 | 32.0 |
| * (not according to the invention) | | | | | | | | | | |

As shown in Table 1, in Catalyst 1 to Catalyst 10 according to the present test examples, a carrier is composed of a composite oxide, and an initial specific surface area is increased. Accordingly, it was confirmed that even in a small amount of water vapor, the CO shift reaction was maintained in a satisfactory manner.

In contrast, in Comparative Catalyst according to the comparative example, the initial specific surface area was smaller than that of Test Catalysts, and the specific surface area after passage of 100 hours was small in the same manner.

Accordingly, even when catalytic activity performance decreased due to use for a long period of time, it was confirmed that Test Catalysts had more excellent performance than that of Comparative Catalyst by an improvement in the initial specific surface area.

In the CO shift catalyst according to this test, the carrier was composed of the composite oxide, and thus the initial specific surface area was increased. Accordingly, even when precipitation of carbon (C) occurred, it was proved that durability was further improved by an increase in the specific surface area, and thus the CO shift reaction was stably maintained for a long period of time.

<Coal Gasification Power Generation Plant>

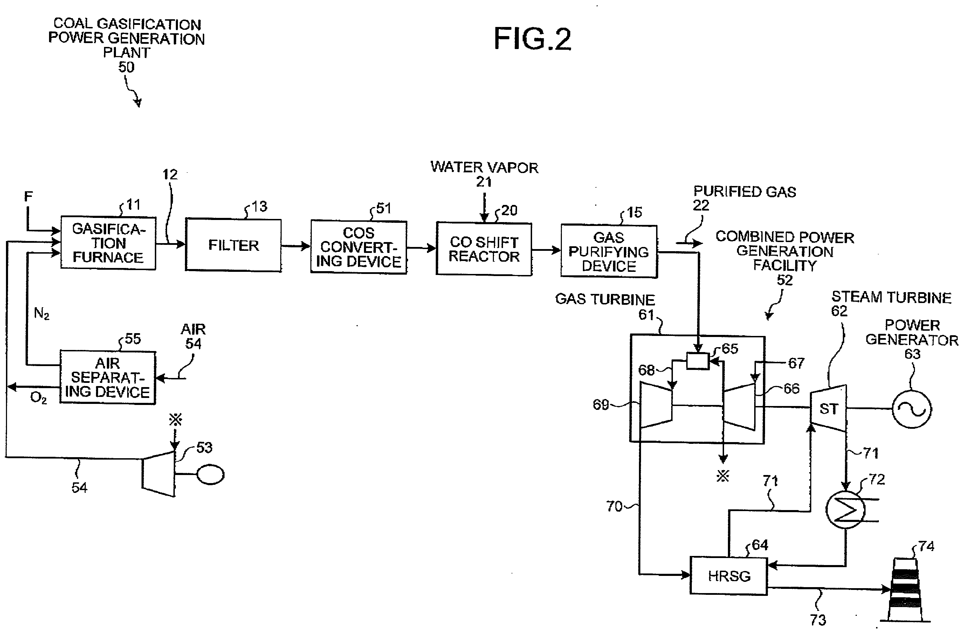

A coal gasification power generation plant provided with the CO shift reactor 20 according to this example will be described with reference to the attached drawing. FIG. 2 is a diagram illustrating an example of the coal gasification power generation plant. As illustrated in FIG. 2, the coal gasification power generation plant 50 includes a gasification furnace 11, a filter 13, a COS converting device 51, a CO shift reactor 20, a gas purifying device ($H_2S/CO_2$ recovery unit) 15, and a combined power generation facility 52.

Coal that is a fuel F, and air 54 from a gasification air compressor 53 are supplied to the gasification furnace 11, and the coal is gasified in the gasification furnace 11, thereby obtaining the gasification gas 12 that is a generated gas. In addition, in the gasification furnace 11, the air 54 is separated into nitrogen ($N_2$) and oxygen ($O_2$) with an air separating device 55 and $N_2$ and $O_2$ are appropriately supplied to the gasification furnace 11. In the coal gasification power generation plant 50, the gasification gas 12 obtained in the gasification furnace 11 is supplied to the filter 13 to remove dust, and then the gasification gas is supplied to the COS converting device 51 to convert COS contained in the gasification gas 12 into $H_2S$.

Then, the gasification gas 12 containing $H_2S$ is supplied to the CO shift reactor 20, and water vapor 21 is supplied to the CO shift reactor 20 to allow a CO shift reaction, which converts CO in the gasification gas 12 into $CO_2$, to occur in the CO shift reactor 20.

In the CO shift reactor 20, the CO shift catalyst according to the invention is used. Accordingly, even when an amount of water vapor is greatly reduced as described above, it is possible to efficiently generate a reformed gas for a long period of time.

The resultant reformed gas, which is obtained after converting CO in the gasification gas 12 into $CO_2$ in the CO shift reactor 20, is supplied to a $H_2S/CO_2$ recovery unit that is the gas purifying device 15 to remove $CO_2$ and $H_2S$ in the reformed gas with the $H_2S/CO_2$ recovery unit.

A purified gas 22, which is purified with the gas purifying device 15, is supplied to the combined power generation facility 52. The combined power generation facility 52 includes a gas turbine 61, a steam turbine 62, a power generator 63, and a heat recovery steam generator (HRSG) 64. The combined power generation facility 52 supplies the purified gas 22 to a combustor 65 of the gas turbine 61 that is a power generating means. In addition, the gas turbine 61 supplies air 67, which is supplied to a compressor 66, to the combustor 65. The gas turbine 61 combusts the purified gas 22 with the combustor 65 to generate a high-pressure and high-temperature combustion gas 68, and a turbine 69 is driven with the combustion gas 68. The turbine 69 is connected to the power generator 63, and thus when the turbine 69 is driven, the power generator 63 generates power. A flue gas 70 after driving the turbine 69 has a temperature of 500°C to 600°C. Accordingly, the flue gas 70 is transmitted to the heat recovery steam generator (HRSG) 64 to recover thermal energy. In the heat recovery steam generator (HRSG) 64, steam 71 is generated by the thermal energy of the flue gas 70, and the steam turbine 62 is driven with the steam 71. After being used in the steam turbine 62, the steam 71 is discharged from the steam turbine 62, and is cooled with a heat exchanger 72. Then, the steam 71 is supplied to the heat recovery steam generator 64. In addition, with regard to a flue gas 73 from which thermal energy is recovered with the heat recovery steam generator 64, NOx and the like in the flue gas 73 are removed with a denitrification device (not illustrated) and the like, and then the flue gas 73 is discharged to the air through a chimney 74.

As described above, according to the coal gasification power generation plant 50 provided with the CO shift reactor 20 according to this example, even in a case where an amount of water vapor is reduced in the CO shift reactor 20 (water vapor ($H_2O$)/CO = approximately 1), since in the CO shift catalyst, the carrier is composed of the composite oxide, the initial specific surface area is increased. Accordingly, even in a case where precipitation of carbon (C) occurs in a small amount of water vapor, durability is excellent, and thus it is possible to stably maintain the CO shift reaction for a long period of time. As a result, with regard to the gasification gas 12 that is gasified with the gasification furnace 11, CO contained in the gasification gas 12 is converted into $CO_2$, and thus it is possible to stably perform the CO shift reaction with respect to a reformed gas for a long period of time.

According to this, with regard to the CO shift reaction, it is possible' to continuously perform the CO shift reaction with less water vapor in a stable manner, and thus it is possible to reduce an amount of water vapor that is extracted from HRSG 64. Accordingly, it is possible perform an operation in which energy efficiency of the coal gasification power generation plant 50 is improved.

In addition, an installation position of the CO shift reactor 20 is not limited to a position between the COS converting device 51 and the gas purifying device ($H_2S/CO_2$ recovery unit) 15 (on a front end side of the $H_2S/CO_2$ recovery unit), and the CO shift reactor 20 may be installed downstream of the gas purifying device ($H_2S/CO_2$ recovery unit) 15.

In addition, in this example, description has been given to a case where the purified gas 22 discharged from the gas purifying device ($H_2S/CO_2$ recovery unit) 15 is used as a gas for a turbine. However, a large amount of CO contained in the gasification gas 12 is converted into $CO_2$ in the CO shift reactor 20, and thus the purified gas 22 may be used, for example, as a raw material gas, which composes chemicals such as methanol and ammonia, in addition to the gas for a turbine.

Hereinbefore, description has been given to a case where in the CO shift reactor 20 according to this example, CO contained in the gasification gas 12, which is generated by gasification of the fuel F such as coal with the gasification furnace 11, is converted into COz. However, the invention may be similarly applied to a CO shift reactor which converts a CO-containing gas into $CO_2$ with a fuel cell, and the like.

Reference Signs List

| | |
|---|---|
| 10 | GASIFICATION GAS PURIFYING SYSTEM |
| 11 | GASIFICATION FURNACE |
| 12 | GASIFICATION GAS |
| 13 | FILTER |
| 14 | WET SCRUBBER DEVICE |
| 15A | ABSORBER |
| 15B | REGENERATOR |
| 15 | GAS PURIFYING DEVICE |
| 19 | CO SHIFT CATALYST |
| 20 | CO SHIFT REACTOR |
| 21 | WATER VAPOR |
| 22 | PURIFIED GAS |

**Claims**

1. A CO shift catalyst that reforms carbon monoxide (CO) in a gasification gas, comprising:

   an active component including 0.1 wt% to 25 wt% of either molybdenum (Mo) or iron (Fe), and 0.01 wt% to 10 wt% of either nickel (Ni) or ruthenium (Ru); and
   a carrier which carries the active component,
   **characterized in that** the carrier is a composite oxide selected from $TiO_2$-$SiO_2$ and $TiO_2$-$La_2O_3$.

**Patentansprüche**

1. CO-Shift-Katalysator zum Reformen von Kohlenmonoxid (CO) in einem Vergasungsgas umfassend:

   eine aktive Komponente, die 0,1 Gew.-% bis 25 Gew.-% von entweder Molybdän (Mo) oder Eisen (Fe), und 0,01 Gew.-% bis 10 Gew.-% von entweder Nickel (Ni) oder Ruthenium (Ru) enthält; und
   einen Träger, der die aktive Komponente trägt,
   **dadurch gekennzeichnet, dass** der Träger ein Mischoxid ausgewählt aus $TiO_2$-$SiO_2$ und $TiO_2$-$La_2O_3$ ist.

**Revendications**

1. Catalyseur de conversion de CO qui reforme du monoxyde de carbone (CO) en un gaz de gazéification, comprenant :

   un composant actif comportant 0,1 % en poids à 25 % en poids de molybdène (Mo) ou de fer (Fe), et 0,01 % en poids à 10 % en poids de nickel (Ni) ou de ruthénium (Ru) ; et
   un support qui supporte le composant actif,
   **caractérisé en ce que** le support est un oxyde composite choisi parmi $TiO_2$-$SiO_2$ et $TiO_2$-$La_2O_3$.

# FIG.1

FIG.2

COAL GASIFICATION POWER GENERATION PLANT 50

11 GASIFICATION FURNACE

F

13 FILTER

12

51 COS CONVERTING DEVICE

20 CO SHIFT REACTOR

WATER VAPOR 21

15 GAS PURIFYING DEVICE

PURIFIED GAS 22

COMBINED POWER GENERATION FACILITY 52

GAS TURBINE 61

65 · 66 · 67 · 68 · 69

STEAM TURBINE 62

POWER GENERATOR 63

ST · 71 · 72

71 · 73 · 74

64 HRSG

70

55 AIR SEPARATING DEVICE

AIR 54

N₂ · O₂

53

54

13

**EP 2 939 738 B1**

**REFERENCES CITED IN THE DESCRIPTION**

**Patent documents cited in the description**

- JP 2004331701 A
- JP 2011157486 A
- US 2012294789 A1